# FASCICULE DE BREVET EUROPEEN

(11) **EP 0 854 083 B1**
(45) Date de publication et mention de la délivrance du brevet: **04.08.2004**
(21) Numéro de dépôt: 97403111.4
(22) Date de dépôt: 22.12.1997
(51) Int. Cl.: B64G 1/10, B64G 1/24

(54) **Procédé de lancement simultané de satellites sur des orbites non coplanaires en utilisant des orbites très excentriques et du freinage atmosphérique**
Verfahren um Satelliten in nicht-koplanare Umlaufbahnen unter Verwendung von sehr excentrischen Umlaufbahnen und atmosphärischem Strömungswiderstand gleichzeitig zu bringen
Method for simultaneously launching satellites into non-coplanar orbits using orbits with high eccentricity and atmospheric drag

(30) Priorité: 31.12.1996 FR 9616276
(43) Date de publication de la demande: 22.07.1998
(73) Titulaire: SOCIETE NATIONALE D'ETUDE ET DE CONSTRUCTION DE MOTEURS D'AVIATION -Snecma, F-75015 Paris (FR)
(72) Inventeur: Koppel, Christophe, 77176 Nandy (FR); Valentian, Dominique, 78710 Rosny (FR)
(74) Mandataire: Thévenet, Jean-Bruno

(56) Documents cités:
- US-A- 5 393 017
- VINH ET AL.: "EXPLICIT GUIDANCE OF DRAG-MODULATED AEROASSISTED TRANSFER BETWEEN ELLIPTICAL ORBITS" JOURNAL OF GUIDANCE, CONTROL, AND DYNAMICS, vol. 9, no. 3, mai 1986, AUSTIN, TEXAS, USA, pages 274-280, XP002041745
- MATHEWS ET AL.: "EFFICIENT SPACECRAFT FORMATIONKEEPING WITH CONSIDERATION OF BALLISTIC COEFFICIENT CONTROL" AIAA 26TH AEROSPACE SCIENCES MEETING, 11 - 14 janvier 1988, RENO, NEVADA, USA, pages 1-11, XP002041746
- ATZEI ET AL.: "SOHO AND CLUSTER: EUROPE'S POSSIBLE CONTRIBUTION TO THE ISTP" ESA BULLETIN, no. 41, février 1985, PARIS, FRANCE, pages 21-28, XP002041728

## Description

### Domaine de l'invention

La présente invention a pour objet un procédé et un système de lancement simultané de satellites sur des orbites non coplanaires, selon lequel on dispose un premier satellite sur un lanceur adapté pour placer pratiquement directement ledit premier satellite sur une première orbite finale présentant des premiers paramètres orbitaux avec une première valeur d'excentricité, une première valeur d'inclinaison et une première valeur d'apogée et on dispose sur le lanceur au moins un deuxième satellite destiné à être placé sur une deuxième orbite finale présentant des deuxièmes paramètres orbitaux avec une deuxième valeur d'excentricité, une deuxième valeur d'inclinaison et une deuxième valeur d'apogée qui sont substantiellement différentes des valeurs correspondantes des premiers paramètres orbitaux foumis par le lanceur et appliqués au premier satellite lancé simultanément avec le deuxième satellite, selon le préambule de la revendication 1.

### Art antérieur

Les lancements doubles ou multiples de satellites sont généralement effectués sur des orbites coplanaires et d'excentricités voisines.

Dans quelques cas, tels que le deuxième lancement du lanceur H-2, on procède à un réallumage du dernier étage du lanceur pour placer un deuxième satellite en orbite de transfert géostationnaire, après avoir placé, avant réallumage de ce dernier étage du lanceur, un premier satellite en orbite circulaire basse. Dans ce cas, les orbites des deux satellites disposés sur le même lanceur restent cependant pratiquement coplanaires.

Or, il existe une demande importante pour placer des satellites sur des orbites non coplanaires, en particulier pour placer un premier satellite une orbite circulaire basse inclinée, de préférence polaire, et un deuxième satellite sur une orbite géostationnaire, ou encore placer plusieurs satellites sur des orbites d'inclinaisons très différentes (0°, 55° et 65° par exemple).

En pratique, ce genre de mission n'a jamais été considéré car les changements d'inclinaison en orbite basse et obtenus de manière classique sont très coûteux. Par exemple, l'incrément de vitesse nécessaire pour passer d'une orbite polaire héliosynchrone à une orbite équatoriale circulaire basse est de 11 km/s ce qui est aussi important que pour lancer à partir du sol terrestre une sonde sur l'orbite lunaire !

Dans un article intitulé "Soho and Cluster: Europe's Possible Contribution to the ISTP", de A. Atzei, J. Ellwood et G. Whitcomb, paru dans ESA Bulletin, N° 41, février 1985, Paris, il est mentionné l'étude d'une mission "cluster" selon laquelle quatre satellites artificiels seraient lancés simultanément et mis en orbite autour de la Terre avec des orbites polaires fortement elliptiques présentant des inclinaisons différentes et modifiées de façon périodique pour obtenir des distances variables entre les quatre satellites. Il est à noter que dans ce cas les changements d'orbite sont effectués exclusivement à l'aide des systèmes de propulsion embarqués sur les satellites.

En matière de lancement d'un satellite unique, on a déjà utilisé les lois de la mécanique céleste selon lesquelles l'incrément de vitesse à fournir pour modifier l'inclinaison de l'orbite d'un satellite diminue d'autant plus que l'apogée de l'orbite de transfert est élevé.

Cette particularité est utilisée en particulier par le lanceur PROTON, pour mettre en orbite géostationnaire un satellite unique : le satellite est placé sur une orbite super synchrone et la correction d'inclinaison (environ 50°) est effectuée à l'apogée (situé entre 50 000 et 90 000 km d'altitude), ce qui permet d'optimiser l'incrément de vitesse total à foumir. L'incrément de vitesse nécessaire est alors réduit à quelques centaines de m/s.

Cet incrément de vitesse est d'autant plus faible que l'excentricité de l'orbite est élevée. D'un autre côté, l'augmentation de l'apogée de l'orbite au-delà de 36 000 km ne nécessite pas un incrément de vitesse important.

L'assistance gravitationnelle de la lune peut être utilisée pour effectuer le changement d'inclinaison. Ainsi, dans une demande de brevet français au nom de la Société Européenne de Propulsion, déposée le même jour que la présente demande de brevet, il est décrit un procédé et un système de lancement simultané de satellites sur des orbites non coplanaires en utilisant l'assistance gravitationnelle lunaire. Dans ce cas, l'incrément de vitesse permettant le changement d'inclinaison d'une orbite est ainsi fourni par l'assistance gravitationnelle de la lune. Toutefois, l'utilisation de la réaction de gravitation allonge la manoeuvre de 7 à 28 jours. Or, il existe des cas où l'on souhaite bénéficier d'un temps de transfert plus court et où, par suite, il est préférable que l'incrément de vitesse ne soit pas obtenu par l'assistance gravitationnelle de la lune, et soit réalisé par une phase propulsive.

### Objet et description succincte de l'invention

L'invention vise à permettre de réaliser de façon économique le lancement simultané de satellites destinés à être placés sur des orbites non coplanaires.

L'invention vise plus particulièrement à réduire de façon significative l'énergie utilisée par les systèmes de propulsion disposés sur les satellites à placer en orbite et qui n'ont pas été placés sur une orbite proche de leur orbite finale directement par le lanceur sur lequel sont disposés les satellites, sans faire appel à l'assistance gravitationnelle lunaire.

Ces buts sont atteints grâce à un procédé de lancement simultané de satellites sur des orbites non coplanaires, selon lequel on dispose un premier satellite sur un lanceur adapté pour placer pratiquement directement ledit premier satellite sur une première orbite finale présentant des premiers paramètres orbitaux avec une première valeur d'excentricité, une première valeur d'inclinaison et une première valeur d'apogée et on dispose sur le lanceur au moins un deuxième satellite destiné à être placé sur une deuxième orbite finale présentant des deuxièmes paramètres orbitaux avec une deuxième valeur d'excentricité, une deuxième valeur d'inclinaison et une deuxième valeur d'apogée qui sont substantiellement différentes des valeurs correspondantes des premiers paramètres orbitaux fournis par le lanceur et appliqués au premier satellite lancé simultanément avec le deuxième satellite, caractérisé en ce que pour la mise en place du deuxième satellite, on procède au cours d'une première manoeuvre à un transfert du deuxième satellite sur une orbite d'attente fortement elliptique, dont l'apogée est situé typiquement entre 50 000 km et 400 000 km, dont le demi grand axe est situé dans le plan orbital initial, on procède, au cours d'une deuxième manoeuvre (se situant au voisinage de l'apogée de l'orbite d'attente) à un changement d'inclinaison de l'orbite d'attente et de son périgée, pour placer le deuxième satellite sur une orbite intermédiaire, on procède à une troisième manoeuvre de correction à mi-course de l'orbite intermédiaire, on procède à une quatrième manoeuvre comportant au moins une étape mettant un jeu de freinage atmosphérique au voisinage du périgée de l'orbite intermédiaire de manière à abaisser l'altitude de l'apogée de l'orbite intermédiaire et on procède à une cinquième manoeuvre au cours de laquelle est fournie au deuxième satellite une impulsion à l'apogée de l'orbite intermédiaire de manière à relever le périgée et transformer l'orbite intermédiaire en ladite deuxième orbite finale constituée par une orbite basse inclinée.

La période TA de l'orbite d'attente est calculée de manière que l'apogée de cette orbite d'attente soit en visibilité d'une station au sol et la deuxième manoeuvre se situant au voisinage de l'apogée de l'orbite d'attente est commandée depuis la station au sol.

La troisième manoeuvre de correction à mi-course de l'orbite intermédiaire permet de situer le périgée de l'orbite intermédiaire entre 80 et 140 km d'altitude.

La quatrième manoeuvre comportant au moins une étape mettant en jeu un freinage atmosphérique utilise le contrôle d'attitude du deuxième satellite de telle manière que l'axe de freinage de ce dernier soit sensiblement aligné avec son vecteur vitesse.

Selon un mode particulier de réalisation, la quatrième manoeuvre comprend un ensemble de plusieurs étapes mettant en jeu un freinage atmosphérique de façon à abaisser à chaque étape l'altitude de l'apogée de l'orbite intermédiaire.

L'invention concerne encore un procédé du type décrit plus haut, pour le lancement simultané d'une pluralité de deuxièmes satellites sur des orbites finales constituées par des orbites à basses altitudes, notamment des orbites circulaires basses d'inclinaisons différentes tandis que le premier satellite est placé sur une première orbite finale constituée par une orbite de transfert géostationnaire faiblement inclinée ou une orbite de transfert supergéostationnaire, caractérisé en ce que au cours de la deuxième manoeuvre, on effectue séparément sur chaque deuxième satellite une correction à mi-course sur la demi-orbite aller de l'orbite d'attente permettant à chaque deuxième satellite de viser à l'apogée de l'orbite d'attente un changement d'inclinaison différent, et au cours de la troisième manoeuvre, on effectue pour chaque deuxième satellite une deuxième correction à mi-course sur chaque orbite intermédiaire pour ajuster l'altitude de chaque périgée de chaque orbite intermédiaire.

A titre de variante, l'invention concerne également un procédé du type décrit plus haut, pour le lancement simultané d'une pluralité de deuxièmes satellites sur des orbites finales constituées par des orbites à basses altitudes, tandis que le premier satellite est placé sur une première orbite finale constituée par une orbite de transfert géostationnaire faiblement inclinée, ou une orbite de transfert supergéostationnaire, caractérisé en ce que au cours de la première manoeuvre, les deuxièmes satellites sont transférés sur des orbites d'attente super-synchrones légèrement différentes moyennant la foumiture de très légers incréments de vitesse, et au cours de la deuxième manoeuvre, on procède à des changements d'inclinaison identiques pour tous les deuxièmes satellites de manière à placer ceux-ci sur des orbites intermédiaires similaires, mais avec des différences de période conduisant à des heures de passage différentes des différents deuxièmes satellites au périgée des orbites intermédiaires de telle sorte qu'à la fin de la cinquième manoeuvre, les différents deuxièmes satellites sont placés sur une même orbite finale constituée par une orbite basse inclinée, tout en présentant des différences de phase entre eux.

L'invention concerne également, selon une première variante, un procédé du type décrit plus haut, caractérisé en ce que le deuxième satellite est équipé d'un calculateur de bord et d'un système de propulsion chimique comprenant un propulseur principal embarqué à bord dudit deuxième satellite et des propulseurs de contrôle d'attitude.

Selon une caractéristique particulière, ledit deuxième satellite comprend un senseur d'astre, un senseur terrestre à champ variable et un tableau d'éphémérides inclus dans le calculateur de bord permettant de calculer les angles entre le vecteur poussée et les directions terre-satellite et soleil-satellite, et donc de déterminer l'attitude du deuxième satellite au cours des manoeuvres.

Le deuxième satellite peut en outre comprendre des gyromètres contrôlant les propulseurs de contrôle d'attitude qui assurent la rotation du corps du deuxième satellite pour orienter le propulseur principal dans la direction visée.

L'invention concerne encore, selon une autre variante, un procédé du type décrit plus haut, caractérisé en ce que le deuxième satellite est équipé d'un calculateur de bord et en outre d'un système de propulsion électrique comprenant au moins des propulseurs électriques à forte impulsion spécifique embarqués à bord dudit deuxième satellite, les propulseurs électriques pouvant être du type ionique, arc jet ou à dérive fermée d'électrons.

Selon un mode particulier de réalisation, le deuxième satellite comprend un senseur d'horizon terrestre à champ variable pour obtenir la position de la Terre et des roues de réaction ou des roues cinétiques pour assurer l'attitude de ce deuxième satellite et le calculateur de bord met en oeuvre une loi de pilotage des propulseurs électriques qui consiste à stabiliser le vecteur poussée perpendiculaire à la direction Terre-satellite.

Selon un autre mode particulier de réalisation, le deuxième satellite comprend un senseur d'astre ainsi qu'une table d'éphémérides incluse dans le calculateur de bord pour déterminer l'attitude de ce deuxième satellite et des roues de réaction pour assurer l'attitude de ce deuxième satellite et le calculateur de bord met en oeuvre une loi de pilotage des propulseurs électriques qui consiste à pointer le vecteur poussée selon une direction inertielle.

Avantageusement, le corps du deuxième satellite est muni d'au moins deux rétro-réflecteurs laser permettant d'obtenir de manière très précise par télémétrie laser la position de ce deuxième satellite avant les manoeuvres de correction à mi-course de la troisième manoeuvre.

Un système de propulsion chimique et un système de propulsion électrique peuvent être installés sur un même satellite.

Le deuxième satellite peut comprendre au moins deux panneaux solaires symétriques par rapport au corps de ce deuxième satellite ou au moins un panneau solaire et un bouclier thermique.

### Brève description des dessins

D'autres caractéristiques et avantages de l'invention ressortiront de la description suivante de modes particuliers de réalisation de l'invention, donnés à titre d'exemples, en référence aux dessins annexés sur lesquels :
- la figure 1 est un schéma illustrant un exemple de procédé selon l'invention pour la mise en place d'un premier satellite sur une orbite géostationnaire et la mise en place d'un deuxième satellite transféré de cette orbite géostationnaire à une orbite héliosynchrone,
- la figure 2 est une vue schématique d'un exemple de configuration de système de bord d'un satellite adapté pour faire l'objet d'un transfert d'orbite selon le procédé conforme à l'invention, et
- la figure 3 est un schéma illustrant la mise en oeuvre d'un satellite équipé d'un bouclier thermique et effectuant une partie des manoeuvres du procédé selon l'invention, à savoir une manoeuvre d'acquisition d'attitude et un tir à l'apogée d'une orbite d'attente fortement elliptique pour placer le satellite sur une orbite intermédiaire.

### Description détaillée des modes particuliers de réalisation de l'invention

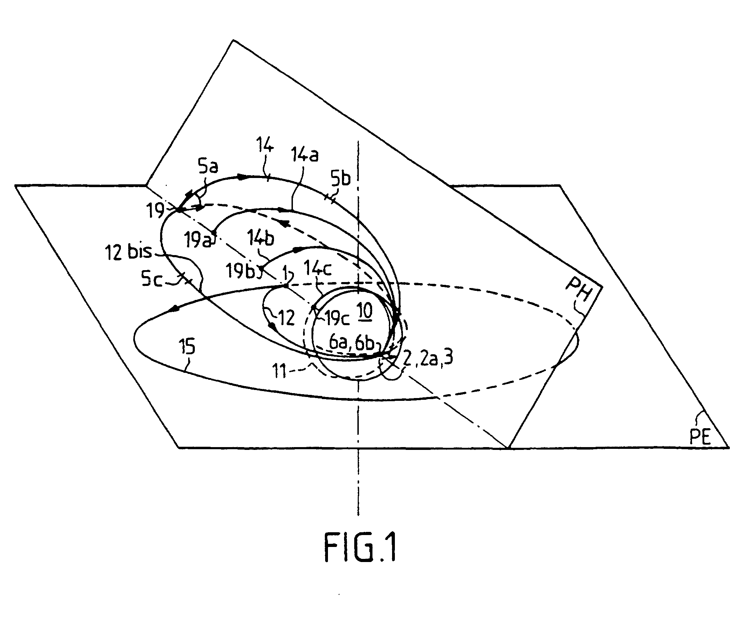

Un exemple de mise en oeuvre du procédé selon l'invention sera décrit en référence à la figure 1.

Deux satellites A et B sont installés sur un même lanceur adapté pour placer ces satellites A et B sur une orbite de transfert géostationnaire 12 autour de la terre 10.

Le premier satellite B est libéré en un point 1 de cette orbite 12 pour être placé par ses propres moyens sur une orbite géostationnaire 15. Le satellite A, qui peut être lié à l'étage supérieur du lanceur, reçoit de la part du lanceur, lors du passage au périgée 2 une impulsion 2a mettant le satellite sur une orbite elliptique d'attente 12bis de période TA qui sera définie plus loin. Selon une variante de réalisation, le satellite A est simplement séparé du lanceur, et un système de propulsion principal du satellite A, du type chimique, est mis à feu dans la zone 3. L'impulsion foumie par le propulseur du satellite place alors ce dernier sur l'orbite d'attente 12bis.

Lorsque le satellite A est à l'apogée 19 sur l'orbite d'attente 12bis, en étant orienté dans la direction inertielle convenable par le système de contrôle d'attitude incorporé au satellite, le propulseur principal du satellite A est mis à feu pour réaliser un changement d'inclinaison 5a qui permet le transfert du satellite A sur une orbite elliptique 14 située dans le plan héliosynchrone, ou le plan de l'orbite circulaire basse, visé PH. Le périgée de cette orbite 14 est situé à une altitude comprise entre 80 et 170 km. Afin d'affiner l'altitude du périgée, il est de préférence effectué une correction à mi-course dans la zone 5b.

On laisse ensuite les passages successifs au périgée 6a, 6b, diminuer les apogées 19a, 19b, 19c de l'orbite considérée 14a, 14b, 14c jusqu'à l'obtention d'une orbite dont l'apogée est inférieur typiquement à 1 000 km. Dans une manoeuvre terminale, le système propulsif du satellite A fournit une impulsion à l'apogée 19c pour circulariser l'orbite 11 qui peut être héliosynchrone ou inclinée.

Il est possible de profiter de la précession nodale due à l'aplatissement de la terre aux pôles pour ajuster à la valeur souhaitée l'heure de passage au noeud ascendant de l'orbite héliosynchrone visée.

L'enchaînement de manoeuvres décrit précédemment prend en compte les considérations générales suivantes :
- l'incrément de vitesse pour modifier l'inclinaison d'une orbite est d'autant plus faible que l'excentricité de l'orbite est élevée (apogée élevé). De telles orbites sont dites super synchrones ;
- le supplément de vitesse à fournir par le lanceur pour passer d'une orbite de transfert géostationnaire (GTO) à une orbite de transfert super synchrone est très faible (inférieur à 600 m/s), bien que l'augmentation de l'altitude de l'apogée soit considérable (de 36 000 à 60 000/400 000 km) ;
- lorsque l'on veut transformer une orbite elliptique en orbite circulaire basse, il n'est pas nécessaire de fournir un incrément de freinage important, le freinage atmosphérique au périgée, permet par passages successifs dans la haute atmosphère, de réduire l'altitude de l'apogée avec une dépense minime d'ergols (impulsions de corrections). En outre, si l'on accepte de limiter le flux thermique à 6 kw/m² au cours du passage dans l'atmosphère, il n'est pas nécessaire de prévoir une protection particulière.

Dans le cadre du lancement simultané de plusieurs satellites, le procédé selon l'invention permet ainsi d'effectuer pour au moins l'un des satellites, le passage d'une orbite de transfert géostationnaire à au moins une orbite circulaire basse inclinée, sans faire appel à l'assistance gravitationnelle lunaire.

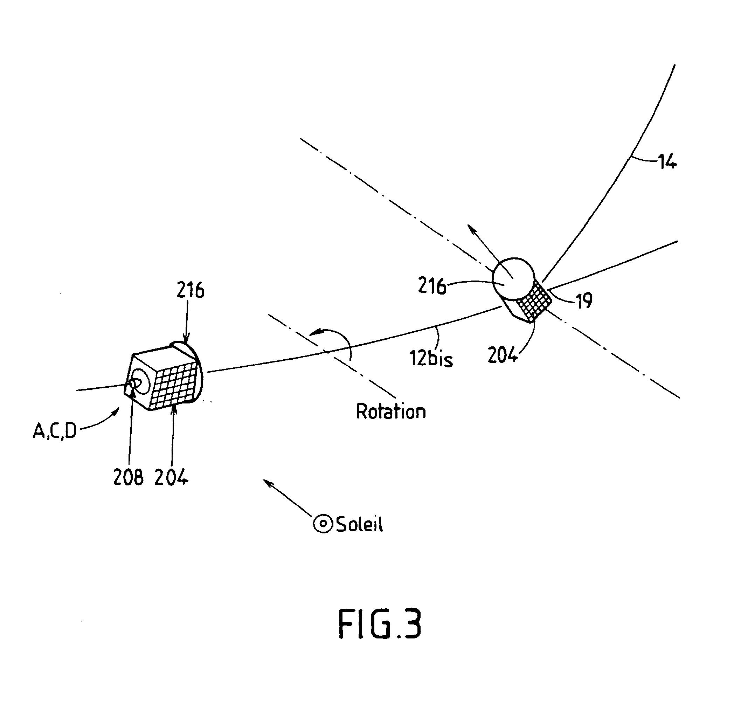

Le procédé est remarquable en particulier par les points suivants, illustrés en référence aux figures 1 et 3 :
1. Le premier satellite B est placé en orbite de transfert faiblement inclinée (typiquement, 7° pour un lancement à partir de Kourou), le deuxième satellite A (ou la grappe de satellites A, C, D) est placé sur une orbite de transfert 12bis très excentrique super synchrone. Cette orbite 12bis peut être obtenue soit par l'étage supérieur du lanceur, soit par le système de propulsion du satellite A ou des satellites A, C, D.
2. Au voisinage de l'apogée 19 de l'orbite super synchrone 12bis, le satellite A est orienté selon le vecteur poussée à fournir pour obtenir l'inclinaison souhaitée.
   Le changement d'inclinaison a lieu de préférence au voisinage du midi local de manière que les panneaux solaires restent éclairés au maximum.
   Le changement d'inclinaison peut être repéré par des gyromètres ou bien par des senseurs d'étoiles simplifiés.
3. Le propulseur principal du satellite A (équivalent au propulseur d'apogée dans un satellite géostationnaire) est mis à feu. Le satellite A passe sur l'orbite 14 d'inclinaison souhaitée.
4. L'attitude nominale du satellite A est rétablie (face utilisation tournée vers la terre 10).
5. Une correction d'orbite à mi-course dans la zone 5b permet de régler l'altitude du périgée (6a) à la valeur correcte pour bénéficier du freinage atmosphérique.
6a. Les panneaux solaires du satellite A sont orientés vis à vis du vecteur vitesse de manière à obtenir un freinage atmosphérique stable (flux thermique inférieure à 6 kw /m²).
7a. Les passages multiples au périgée permettent de faire décroître l'apogée 19a, 19b à la valeur souhaitée 19c (entre 600 et 1 200 km).
6b. Selon une alternative, les panneaux solaires du satellite A sont repliés derrière un bouclier thermique pour assurer un freinage atmosphérique en une seule passe principale.
7b. L'apogée 19 atteint la valeur souhaitée 19c (directement ou après quelques orbites destinées à ajuster l'altitude de l'apogée à la valeur souhaitée).
8. L'altitude du périgée 6b est augmentée par un tir à l'apogée 19c. Le satellite est alors sur son orbite nominale 11.

Cette procédure peut être appliquée à un nombre quelconque de satellites (A, C, D) lancés simultanément, ce qui permet de lancer une constellation sur des orbites non coplanaires en un seul lancement.

Selon un aspect de l'invention, il est procédé à une harmonisation des contraintes de mécanique céleste et de lancement.

Ainsi, pour bénéficier de conditions de visibilité de la station au sol contrôlant le satellite A au cours de la deuxième manoeuvre au voisinage de l'apogée 19, il faut que la demi période TA de l'orbite elliptique 12bis, soit égale à un multiple de 12 heures diminué de la longitude relative entre le site de lancement et la station au sol. Si la station au sol est au voisinage du site de lancement, il faut donc que la demi-période TA de l'orbite super synchrone soit voisine d'un multiple de 12 h ou 24 h. Cela déterminera l'altitude de l'apogée 19.

Par ailleurs, il est à noter que pour transformer une orbite elliptique en orbite circulaire basse, il n'est pas nécessaire de fournir un incrément de freinage important. Le freinage atmosphérique au périgée permet, par passages successifs dans la haute atmosphère, de réduire l'altitude de l'apogée avec une dépense minime d'ergols (qui n'est nécessaire que pour effectuer quelques impulsions de corrections). De plus, sous réserve de limiter le flux thermique à 6 kw/m2 au cours du passage dans l'atmosphère, une protection thermique particulière n'est pas nécessaire.

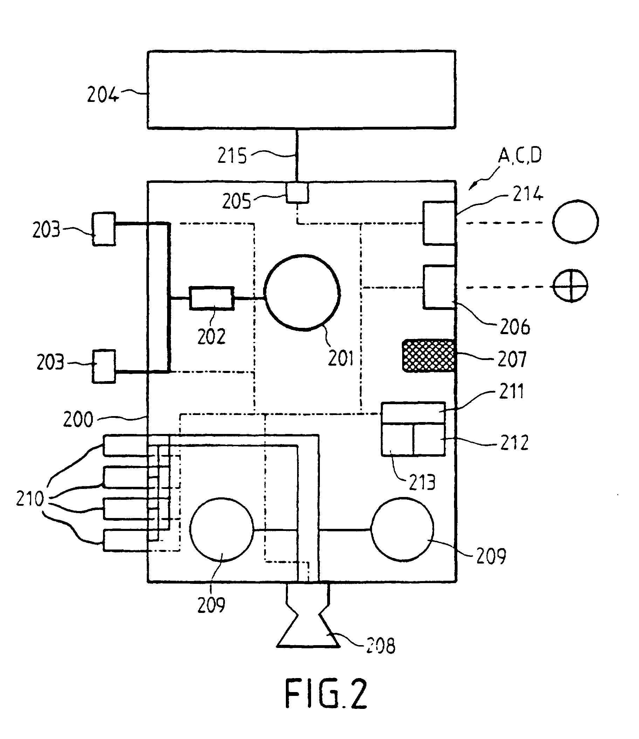

On décrira maintenant, en référence à la figure 2, un exemple de système de lancement de satellite permettant la mise en oeuvre de l'invention.

Un lanceur classique, qui n'a pas été représenté sur les dessins est associé à un premier satellite B et au moins à un deuxième satellite A, dont un exemple est représenté sur la figure 2. Le lanceur étant adapté pour placer pratiquement directement le premier satellite B sur son orbite finale, ce satellite B peut être tout à fait classique et ne comporte que des moyens propulsifs d'appoint destinés à fournir de petites impulsions de correction de trajectoire.

Le deuxième satellite A, qui doit pouvoir effectuer diverses manoeuvres après séparation du lanceur, avant de parvenir sur son orbite finale, comporte un calculateur de bord 211 associé à une horloge 212 et des moyens de traitement d'information 213 munis de mémoires et permettant de déterminer les éphémérides astronomiques pour permettre un pilotage autonome.

Le satellite A est équipé d'un système propulsif qui peut être de type chimique ou électrique. On a représenté sur la figure 2 le cas d'un satellite A comportant les deux types de systèmes propulsifs.

Ainsi, le corps du satellite 200 contient au moins un réservoir de xénon 201 alimentant par l'intermédiaire d'un ensemble détendeur/filtre/électrovannes 202 au moins deux propulseurs électriques 203 qui peuvent être du type ionique, à dérive fermée d'électrons ou encore de type arc jet. L'alimentation en puissance électrique est assurée par au moins un panneau solaire 204 alimentant le satellite par l'intermédiaire d'un bras 215 et d'un mécanisme tournant 205. Pour le freinage atmosphérique par passes multiples, il est préférable de disposer de deux panneaux symétriques par rapport au corps du satellite.

Le satellite peut avantageusement recevoir deux réflecteurs laser 207, situés sur deux faces opposées permettant de repérer très précisément la distance du satellite soit par rapport à la terre, soit par rapport à la lune (qui comporte à sa surface des réflecteurs laser destinés à des expériences spatiales (missions APOLLO et LUNAKHOD), ce qui permet de viser très précisément le corridor d'entrée de freinage atmosphérique.

Le satellite peut en outre recevoir un système de propulsion chimique (par exemple à hydrazine ou bi-ergols) comprenant au moins un propulseur 208 dont la poussée (de quelques centaines de newtons) permet de réaliser des incréments de vitesse quasi impulsionnels, un ou plusieurs réservoirs d'ergol 209 et des propulseurs de contrôle d'attitude 210 associés à des gyromètres.

Le satellite comporte en outre un senseur terrestre à champ variable 206 et au moins un senseur d'astre 214 (senseur solaire ou senseur stellaire) fournissant deux coordonnées angulaires.

Le senseur d'astre 214 et le senseur terrestre à champ variable 206 associés au tableau d'éphémérides inclus dans le calculateur de bord 211 permettent de calculer les angles entre le vecteur poussée et les directions terre-satellite et soleil-satellite, et donc de déterminer l'attitude du satellite A au cours des manoeuvres.

Les gyromètres contrôlent les propulseurs de contrôle d'attitude 210 qui assurent la rotation du corps du deuxième satellite pour orienter le propulseur principal 208 dans la direction visée.

Le calculateur de bord 211 contrôle les deux systèmes de propulsion.

En ce qui concerne le système de propulsion électrique, selon un premier mode de réalisation, le senseur d'horizon terrestre à champ variable 206 permet d'obtenir la position de la Terre, et des roues de réaction assurent l'attitude du satellite A. Le calculateur de bord 211 met en oeuvre une loi de pilotage des propulseurs électriques 203 qui consiste à stabiliser le vecteur poussée perpendiculaire à la direction Terre-satellite.

Selon un autre mode de réalisation, le senseur d'astre 214 et la table d'éphémérides incluse dans le calculateur de bord 211 permettent de déterminer l'attitude du satellite A. Des roues de réaction assurent l'attitude du satellite. Le calculateur de bord 211 met en oeuvre une loi de pilotage des propulseurs électriques qui consiste à pointer le vecteur poussée selon une direction inertielle.

Le procédé selon l'invention permet, au prix d'un incrément de vitesse modéré, qui peut être obtenu à l'aide d'un système propulsif de faible puissance incorporé au satellite à placer en orbite, de réaliser des changements de plans orbitaux qui ne pourraient pas être réalisés directement à l'aide de systèmes de propulsion chimique en opérant un transfert classique, compte tenu de la nécessite de limiter la masse embarquée.

Le tableau 1 ci-dessous indique, en km/s, les incréments de vitesse nécessaires d'une part à un transfert classique et d'autre part avec un transfert selon le procédé conforme à l'invention pour différents exemples de changement d'orbites dont les plans ne coïncident pas.

**Tableau 1**

| Comparaison des incréments de vitesse en transfert classique et en transfert selon l'invention (en km/s) | | |
|---|---|---|
| | Transfert classique | Transfert selon l'invention |
| Orbite héliosynchrone/GSO | 6 | 3 + 0,5 + 0,1 |
| GTO/orbite héliosynchrone (ou orbite circulaire d'inclinaison quelconque) | 4.7 | 0,7 + 0,3 + 0,2 |
| Changement d'inclinaison de 60° (entre orbites circulaires basses) | 7.5 | 3 + 0,2 + 0,1 |

Un premier exemple d'application de l'invention a été décrit précédemment en montrant le passage d'une orbite géostationnaire à une orbite circulaire basse inclinée.

Dans ce cas, le premier satellite B est mis en GTO ou en orbite de transfert super-synchrone 15. Le deuxième satellite A est placé en orbite d'attente super-synchrone 12bis dont l'altitude d'apogée 19 est suffisante. L'inclinaison est corrigée à l'apogée 19.

Une correction de trajectoire dans la zone 5b permet d'ajuster l'altitude du périgée à 80/160 km, l'apogée 19a, 19b est diminué par passages successifs dans l'atmosphère et l'orbite est circularisée.

Le procédé selon l'invention permet non seulement d'utiliser un seul lanceur pour mettre en orbite deux satellites différents sur des orbites non coplanaires, mais permet aussi de lancer, outre un satellite B placé sur une orbite géostationnaire, une constellation de satellites A, C, D placés simultanément sur des orbites d'inclinaisons différentes.

Dans ce cas, les satellites A, C, D sont lancés sur une orbite GTO 12bis ou en orbite de transfert super-synchrone sensiblement équatoriale. Une correction à mi course, dans la zone 5c, effectuée séparément sur chaque satellite A, C, D, permet de viser pour chaque satellite un changement d'inclinaison différent dans la zone 5a. Une deuxième correction à mi course dans la zone 5b (sur la demi orbite de retour) permet d'ajuster l'altitude de chaque périgée. L'orbite est circularisée par freinage atmosphérique et impulsion de correction comme dans le cas précédent.

L'invention permet également de placer une constellation de satellites A, C, D sur des orbites d'inclinaison identique mais de périodes différentes.

Les satellites A, C, D sont placés sur les orbites super-synchrones 12bis légèrement différentes, moyennant de très légers incréments de vitesse.

La correction d'inclinaison dans la zone 5a est la même pour tous les satellites A, C, D mais les différences de périodes (faibles en valeurs relatives, mais pouvant être de l'ordre de plusieurs heures en valeur absolue) conduiront à des heures de passage au périgée (supposé sensiblement équatorial) différentes, ce qui conduira aux périodes différentes désignées après freinage atmosphérique. Dans le cas de l'utilisation d'un bouclier thermique 216, cette méthode permet une mise en place très rapide de la constellation (dans le cas des méthodes classiques par précession différentielle, il faut plus d'un mois).

## Revendications

1. Procédé de lancement simultané de satellites sur des orbites non coplanaires, selon lequel on dispose un premier satellite (B) sur un lanceur adapté pour placer pratiquement directement ledit premier satellite (B) sur une première orbite finale (15) présentant des premiers paramètres orbitaux avec une première valeur d'excentricité, une première valeur d'inclinaison et une première valeur d'apogée et on dispose sur le lanceur au moins un deuxième satellite (A, C, D) destiné à être placé sur une deuxième orbite finale (11) présentant des deuxièmes paramètres orbitaux avec une deuxième valeur d'excentricité, une deuxième valeur d'inclinaison et une deuxième valeur d'apogée qui sont substantiellement différentes des valeurs correspondantes des premiers paramètres orbitaux fournis par le lanceur et appliqués au premier satellite (B) lancé simultanément avec le deuxième satellite (A, C, D),
**caractérisé en ce que** pour la mise en place du deuxième satellite (A, C, D), on procède au cours d'une première manoeuvre à un transfert du deuxième satellite (A, C, D) sur une orbite d'attente (12bis) fortement elliptique, dont l'apogée (19) est situé typiquement entre 50 000 km et 400 000 km, dont le demi grand axe est situé dans le plan orbital initial (12), on procède, au cours d'une deuxième manoeuvre se situant au voisinage de l'apogée (19) de l'orbite d'attente (12bis) à un changement d'inclinaison de l'orbite d'attente (12bis) et de son périgée, pour placer le deuxième satellite (A, C, D) sur une orbite intermédiaire (14), on procède à une troisième manoeuvre de correction à mi-course (5b) de l'orbite intermédiaire (14), on procède à une quatrième manoeuvre comportant au moins une étape mettant un jeu de freinage atmosphérique au voisinage du périgée (6a, 6b) de l'orbite intermédiaire de manière à abaisser l'altitude de l'apogée (19, 19a, 19b, 19c) de l'orbite intermédiaire (14, 14a, 14b, 14c) et on procède à une cinquième manoeuvre au cours de laquelle est fournie au deuxième satellite (A, C, D) une impulsion à l'apogée (19c) de l'orbite intermédiaire (14c) de manière à relever le périgée et transformer l'orbite intermédiaire (14c) en ladite deuxième orbite finale (11) constituée par une orbite basse inclinée.

2. Procédé selon la revendication 1, **caractérisé en ce que** la période TA de l'orbite d'attente (12bis) est calculée de manière que l'apogée (19) de cette orbite d'attente (12bis) soit en visibilité d'une station au sol et **en ce que** la deuxième manoeuvre se situant au voisinage de l'apogée (19) de l'orbite d'attente (1 2bis) est commandée depuis la station au sol.

3. Procédé selon la revendication 1 ou la revendication 2, **caractérisé en ce que** la troisième manoeuvre de correction à mi-course (5b) de l'orbite intermédiaire (14) permet de situer le périgée (6a) de l'orbite intermédiaire (14) entre 80 et 140 km d'altitude.

4. Procédé selon l'une quelconque des revendications 1 à 3, **caractérisé en ce que** la quatrième manoeuvre comportant au moins une étape mettant en jeu un freinage atmosphérique utilise le contrôle d'attitude du deuxième satellite (A,C,D) de telle manière que l'axe de freinage de ce dernier soit sensiblement aligné avec son vecteur vitesse.

5. Procédé selon l'une quelconque des revendications 1 à 4, **caractérisé en ce que** la quatrième manoeuvre comprend un ensemble de plusieurs étapes mettant en jeu un freinage atmosphérique de façon à abaisser à chaque étape l'altitude de l'apogée (19, 19a, 19b) de l'orbite intermédiaire (14, 14a, 14b).

6. Procédé selon l'une quelconque des revendications 1 à 5, pour le lancement simultané d'une pluralité de deuxièmes satellites (A, C, D) sur des orbites finales constituées par des orbites à basses altitudes, notamment des orbites circulaires basses d'inclinaisons différentes tandis que le premier satellite (B) est placé sur une première orbite finale (15) constituée par une orbite de transfert géostationnaire faiblement inclinée, ou une orbite de transfert supergéostationnaire, **caractérisé en ce que** au cours de la deuxième manoeuvre, on effectue séparément sur chaque deuxième satellite (A, C, D), une correction à mi-course (5c) sur la demi-orbite aller de l'orbite d'attente (12bis) permettant à chaque deuxième satellite (A, C, D) de viser à l'apogée (19) de l'orbite d'attente (12bis) un changement d'inclinaison différent, et au cours de la troisième manoeuvre, on effectue pour chaque deuxième satellite (A, C, D) une deuxième correction à mi-course (5b) sur chaque orbite intermédiaire (14) pour ajuster l'altitude de chaque périgée de chaque orbite intermédiaire (14).

7. Procédé selon l'une quelconque des revendications 1 à 5, pour le lancement simultané d'une pluralité de deuxièmes satellites (A, C, D) sur des orbites finales constituées par des orbites à basses altitudes, tandis que le premier satellite (B) est placé sur une première orbite finale (15) constituée par une orbite de transfert géostationnaire faiblement inclinée, ou une orbite de transfert supergéostationnaire, **caractérisé en ce que** au cours de la première manoeuvre, les deuxièmes satellites (A, C, D) sont transférés sur des orbites d'attente (12bis) super-synchrones légèrement différentes moyennant la fourniture de très légers incréments de vitesse, et au cours de la deuxième manoeuvre, on procède à des changements d'inclinaison identiques pour tous les deuxièmes satellites (A, C, D) de manière à placer ceux-ci sur des orbites intermédiaires (14) similaires, mais avec des différences de période conduisant à des heures de passage différentes des différents deuxièmes satellites (A, C, D) au périgée des orbites intermédiaires (14), de telle sorte qu'à la fin de la cinquième manoeuvre, les différents deuxièmes satellites (A, C, D) sont placés sur une même orbite finale (11) constituée par une orbite basse inclinée, tout en présentant des différences de phase entre eux.

8. Procédé selon la revendication 1, **caractérisé en ce que** le deuxième satellite (A, C, D) est équipé d'un calculateur de bord (211) et d'un système de propulsion chimique comprenant un propulseur principal (208) embarqué à bord dudit deuxième satellite (A, C, D) et des propulseurs de contrôle d'attitude (210).

9. Procédé selon la revendication 1, **caractérisé en ce que** le deuxième satellite (A, C, D) est équipé d'un calculateur de bord (211) et en outre d'un système de propulsion électrique comprenant au moins des propulseurs électriques à forte impulsion spécifique embarqués à bord dudit deuxième satellite (A, C, D), les propulseurs électriques (203) pouvant être du type ionique, arc jet ou à dérive fermée d'électrons.

10. Procédé selon la revendication 8, **caractérisé en ce que** ledit deuxième satellite (A, C, D) comprend un senseur d'astre (214), un senseur terrestre à champ variable (206) et un tableau d'éphémérides inclus dans le calculateur de bord (211) permettant de calculer les angles entre le vecteur poussée et les directions terre-satellite et soleil-satellite, et donc de déterminer l'attitude du deuxième satellite (A, C, D) au cours des manoeuvres.

11. Procédé selon la revendication 10, **caractérisé en ce que** ledit deuxième satellite (A, C, D) comprend en outre des gyromètres contrôlant les propulseurs de contrôle d'attitude (210) qui assurent la rotation du corps du deuxième satellite pour orienter le propulseur principal (208) dans la direction visée.

12. Procédé selon l'une quelconque des revendications 8 à 11, **caractérisé en ce que** le corps du deuxième satellite (A, C, D) est muni d'au moins deux rétro-réflecteurs laser (207) permettant d'obtenir de manière très précise par télémétrie laser la position de ce deuxième satellite (A, C, D) avant les manoeuvres de correction à mi-course (5b) de la troisième manoeuvre.

13. Procédé selon la revendication 9, **caractérisé en ce que** le deuxième satellite (A, C, D) comprend un senseur d'horizon terrestre à champ variable (206) pour obtenir la position de la Terre et des roues de réaction ou des roues cinétiques pour assurer l'attitude de ce deuxième satellite et **en ce que** le calculateur de bord (211) met en oeuvre une loi de pilotage des propulseurs électriques (203) qui consiste à stabiliser le vecteur poussée perpendiculaire à la direction Terre-satellite.

14. Procédé selon la revendication 9, **caractérisé en ce que** le deuxième satellite (A, C, D) comprend un senseur d'astre (214) ainsi qu'une table d'éphémérides incluse dans le calculateur de bord (211) pour déterminer l'attitude de ce deuxième satellite et des roues de réaction pour assurer l'attitude de ce deuxième satellite et **en ce que** le calculateur de bord (211) met en oeuvre une loi de pilotage des propulseurs électriques (203) qui consiste à pointer le vecteur poussée selon une direction inertielle.

15. Procédé selon l'une quelconque des revendications 8 à 14, **caractérisé en ce que** le deuxième satellite (A, C, D) comprend au moins deux panneaux solaires (204) symétriques par rapport au corps de ce deuxième satellite (A, C, D).

16. Procédé selon l'une quelconque des revendications 8 à 14, **caractérisé en ce que** le deuxième satellite (A, C, D) comprend au moins un panneau solaire (204) et un bouclier thermique (216).

## Patentansprüche

1. Verfahren zum simultanen Befördern von Satelliten auf nicht-koplanare Umlaufbahnen, gemäß dem ein erster Satellit (B) an einer Trägerrakete angeordnet wird, welche dazu angepasst ist, den ersten Satelliten (B) praktisch direkt auf eine erste, endgültige Umlaufbahn (15) zu platzieren, die erste Orbital-Parameter mit einem ersten Exzentrizitätswert, einem ersten Inklinationswert und einem ersten Apogäumswert aufweist, und an der Trägerrakete wenigstens ein zweiter Satellit (A, C, D) angeordnet wird, der auf einer zweiten, endgültigen Umlaufbahn (11) platziert werden soll, die zweite Orbital-Parameter mit einem zweiten Exzentrizitätswert, einem zweiten Inklinationswert und einem zweiten Apogäumswert aufweist, welche sich wesentlich von den entsprechenden Werten der ersten Orbital-Parameter unterscheiden, welche durch die Trägerrakete gegeben sind und auf den ersten, simultan mit dem zweiten Satelliten (A, C, D) beförderten Satelliten (B) bezogen sind,
**dadurch gekennzeichnet, dass**
der zweite Satellit (A, C, D) für das In-Stellung-Bringen des zweiten Satelliten (A, C, D) während eines ersten Manövers auf eine stark elliptische Warte-Umlaufbahn (12bis) gebracht wird, deren Apogäum (19) sich typischerweise zwischen 50.000 km und 400.000 km befindet und deren große Halbachse sich in der Ebene der ursprünglichen Umlaufbahn (12) befindet,
während eines zweiten, in der Umgebung des Apogäums (19) der Warte-Umlaufbahn (12bis) befindlichen Manövers eine Änderung der Inklination der Warte-Umlaufbahn (12bis) und ihres Perigäums durchgeführt wird, um den zweiten Satelliten (A, C, D) auf eine Intermediär-Umlaufbahn (14) zu platzieren,
ein drittes Manöver einer Mittelkurskorrektur (5b) der Intermediär-Umlaufbahn (14) durchgeführt wird,
ein viertes Manöver durchgeführt wird, welches wenigstens eine Flugstrecke aufweist, welche eine atmosphärische Bremsung in der Umgebung des Perigäums (6a, 6b) der Intermediär-Umlaufbahn derart einsetzt, dass die Höhe des Apogäums (19, 19a, 19b, 19c) der Intermediär-Umlaufbahn (14, 14a, 14b, 14c) gesenkt wird,
und ein fünftes Manöver durchgeführt wird, währenddessen dem zweiten Satelliten (A, C, D) ein Impuls am Apogäum (19c) der Intermediär-Umlaufbahn (14c) derart zugeführt wird, dass das Perigäum angehoben wird und die Intermediär-Umlaufbahn (14c) in die zweite, endgültige Umlaufbahn (11), welche durch eine niedrige, geneigte Umlaufbahn gebildet wird, umgewandelt wird.

2. Verfahren nach Anspruch 1, **dadurch gekennzeichnet, dass** die Periode TA der Warteumlaufbahn (12bis) derart berechnet ist, dass das Apogäum (19) dieser Warteumlaufbahn (12bis) im Sichtbereich einer Station auf der Erde ist, und dass das zweite, sich in der Umgebung des Apogäums (19) der Warteumlaufbahn (12bis) befindliche Manöver von der Station auf der Erde aus befehligt wird.

3. Verfahren nach Anspruch 1 oder Anspruch 2, **dadurch gekennzeichnet, dass** das dritte Manöver einer Mittelkurskorrektur (5b) der Intermediär-Umlaufbahn (14) ermöglicht, das Perigäum (6a) der Intermediär-Umlaufbahn (14) zwischen 80 und 140 km Höhe zu positionieren.

4. Verfahren nach einem der Ansprüche 1 bis 3, **dadurch gekennzeichnet, dass** das vierte Manöver, welches wenigstens eine Flugstrecke aufweist, die eine atmosphärische Bremsung einsetzt, die Stellungssteuerung des zweiten Satelliten (A, C, D) derart verwendet, dass dessen Bremsungsachse im wesentlichen mit seinem Geschwindigkeitsvektor ausgerichtet ist.

5. Verfahren nach einem der Ansprüche 1 bis 4, **dadurch gekennzeichnet, dass** das vierte Manöver eine Gruppe von mehreren Flugstrecken aufweist, die eine atmosphärische Bremsung derart einsetzen, dass bei jeder Flugstrecke die Höhe des Apogäums (19, 19a, 19b) der Intermediär-Umlaufbahn (14, 14a, 14b) gesenkt wird.

6. Verfahren nach einem der Ansprüche 1 bis 5 zum simultanen Befördern einer Mehrzahl von zweiten Satelliten (A, C, D) auf endgültige Umlaufbahnen, welche durch Umlaufbahnen niedriger Höhe, insbesondere zirkulare, niedrige Umlaufbahnen verschiedener Inklinationen, gebildet sind, wohingegen der erste Satellit (B) in einer ersten, endgültigen Umlaufbahn (15) platziert wird, welche durch eine schwach geneigte, geostationäre Transfer-Umlaufbahn oder eine supergeostationäre Transfer-Umlaufbahn gebildet ist,
**dadurch gekennzeichnet, dass** während des zweiten Manövers an jedem zweiten Satelliten (A, C, D) eine Mittelkurskorrektur (5c) auf der von der Warte-Umlaufbahn (12bis) verlaufenden Halb-Umlaufbahn getrennt ausgeführt wird und so jedem zweiten Satelliten (A, C, D) ermöglicht wird, am Apogäum (19) der Warteumlaufbahn (12bis) eine unterschiedliche Inklinationsänderung zu erreichen, und dass während des dritten Manövers für jeden zweiten Satelliten (A, C, D) eine zweite Mittelkurskorrektur (5b) auf jeder Intermediär-Umlaufbahn (14) durchgeführt wird, um die Höhe jedes Perigäums jeder Intermediär-Umlaufbahn (14) anzupassen.

7. Verfahren nach einem der Ansprüche 1 bis 5 zum simultanen Befördern einer Mehrzahl von zweiten Satelliten (A, C, D) auf endgültige Umlaufbahnen, welche durch Umlaufbahnen niedriger Höhe gebildet sind, wohingegen der erste Satellit (B) in einer ersten, endgültigen Umlaufbahn (15) platziert wird, welche durch eine schwach geneigte, geostationäre Transfer-Umlaufbahn oder eine supergeostationäre Transfer-Umlaufbahn gebildet ist,
**dadurch gekennzeichnet, dass** die zweiten Satelitten während des ersten Manövers durch die Zuführung sehr geringfügiger Geschwindigkeitssteigerungen auf leicht unterschiedliche, super-synchrone Warte-Umlaufbahnen (12bis) transferiert werden und dass während des zweiten Manövers identische Änderungen der Inklination für alle zweiten Satelliten (A, C, D) derart durchgeführt werden, dass diese auf ähnliche Intermediär-Umlaufbahnen (14) platziert werden, aber mit Unterschieden der Periode, welche zu unterschiedlichen Passagezeitpunkten der unterschiedlichen, zweiten Satelitten (A, C, D) am Perigäum der Intermediär-Umlaufbahnen führen, so dass am Ende des fünften Manövers die unterschiedlichen, zweiten Satelitten (A, C, D) auf einer selben, endgültigen, durch eine niedrige, geneigte Umlaufbahn gebildeten Umlaufbahn (11) platziert sind, wobei sie Phasenunterschiede untereinander aufweisen.

8. Verfahren nach Anspruch 1, **dadurch gekennzeichnet, dass** der zweite Satellit (A, C, D) mit einem Bordrechner (211) und mit einem chemischen Antriebssystem, das einen Hauptantrieb (208), der an Bord des zweiten Satelliten (A, C, D) angeordnet ist, und Stellungssteuerungsantriebe (210) aufweist, ausgestattet ist.

9. Verfahren nach Anspruch 1, **dadurch gekennzeichnet, dass** der zweite Satellit (A, C, D) mit einem Bordrechner (211) und ferner mit einem elektrischen Antriebssystem ausgestattet ist, welches wenigstens elektrische Antriebe hoher spezifischer Impulse aufweist, welche an Bord des zweiten Satelliten (A, C, D) angeordnet sind, wobei die elektrischen Antriebe vom ionischen Typ, vom Lichtbogen-Typ oder vom Typ der geschlossenen Elektronendrift sein können.

10. Verfahren nach Anspruch 8, **dadurch gekennzeichnet, dass** der zweite Satellit (A, C, D) einen Sternsensor (214), einen Erdsensor (206) variablen Feldes und eine in dem Bordrechner (211) enthaltene Ephemeridentafel aufweist, welche ermöglicht, die Winkel zwischen dem Schubvektor und den Richtungen Erde-Satellit und Sonne-Satellit zu berechnen, und somit die Stellung des zweiten Satelliten (A, C, D) während der Manöver zu bestimmen.

11. Verfahren nach Anspruch 10, **dadurch gekennzeichnet, dass** der zweite Satellit (A, C, D) ferner Gyrometer aufweist, welche die Stellungssteuerungsantriebe (210) steuern, welche die Rotation des Körpers des zweiten Satelliten zum Orientieren des Hauptantriebes (208) in die angestrebte Richtung gewährleisten.

12. Verfahren nach einem der Ansprüche 8 bis 11, **dadurch gekennzeichnet, dass** der Körper des zweiten Satelliten (A, C, D) mit wenigstens zwei Laser-Retroreflektoren (207) ausgestattet ist, welche ermöglichen, die Position dieses zweiten Satelliten (A, C, D) vor den Manövern der Mittelkurskorrektur (5b) des dritten Manövers auf sehr präzise Weise durch Laser-Telemetrie zu erhalten.

13. Verfahren nach Anspruch 9, **dadurch gekennzeichnet, dass** der zweite Satellit (A, C, D) einen Erdhorizont-Sensor (206) variablen Feldes, um die Position der Erde zu erhalten, und Reaktionsräder oder kinetische Räder, um die Stellung dieses zweiten Satelliten sicherzustellen, aufweist, und dass der Bordrechner (211) eine Gesetzmäßigkeit zum Steuern der elektrischen Antriebe (203) einsetzt, welche darin besteht, den Schubvektor senkrecht zur Richtung Erde-Satellit zu stabilisieren.

14. Verfahren nach Anspruch 9, **dadurch gekennzeichnet, dass** der zweite Satellit (A, C, D) einen Sternsensor (214) sowie eine in dem Bordrechner (211) enthaltene Ephemeridentafel zum Bestimmen der Stellung des zweiten Satelliten und Reaktionsrader zum Sicherstellen der Stellung dieses zweiten Satelliten aufweist, und dass der Bordrechner (211) eine Gesetzmäßigkeit zum Steuern der elektrischen Antriebe (203) einsetzt, welche darin besteht, den Schubvektor in einer Trägheitsrichtung auszurichten.

15. Verfahren nach einem der Ansprüche 8 bis 14, **dadurch gekennzeichnet, dass** der zweite Satellit (A, C, D) mindestens zwei bezüglich des Körpers dieses zweiten Satelitten (A, C, D) symmetrische Solarpanelen (204) aufweist.

16. Verfahren nach einem der Ansprüche 8 bis 14, **dadurch gekennzeichnet, dass** der zweite Satellit (A, C, D) mindestens ein Solarpanel (204) und ein thermisches Schutzschild (216) aufweist.

## Claims

1. A method of launching satellites simultaneously on non-coplanar orbits, in which a first satellite (B) is put on a launcher suitable for placing said first satellite (B) practically directly on a first final orbit (15) having first orbital parameters with a first eccentricity value, a first inclination value, and a first apogee value, and in which at least one second satellite (A, C, D) is put on the launcher to be placed on a second final orbit (11) having second orbital parameters with a second eccentricity value, a second inclination value, and a second apogee value which are substantially different from the corresponding values of the first orbital parameters provided by the launcher and applied to the first satellite (B) launched simultaneously with the second satellite (A, C, D),
the method being **characterised in that** to place the second satellite (A, C, D) on its orbit, a first manoeuvre is performed to transfer it onto a highly elliptical waiting orbit (12bis) having an apogee (19) that is situated typically in the range 50,000 km to 400,000 km, and having a semi-major axis situated in the initial orbit plane (12), during a second manoeuvre situated in the vicinity of the apogee (19) of the waiting orbit (12bis), the inclination and the perigee of the waiting orbit (12bis) are changed to place the second satellite (A, C, D) on an intermediate orbit (14), a third manoeuvre is performed for mid-course correction (5b) of the intermediate orbit (14), a fourth manoeuvre is performed, including at least one step that makes use of atmospheric breaking in the vicinity of the perigee (6a, 6b) of the intermediate orbit, to lower the altitude of the apogee (19, 19a, 19b, 19c) of the intermediate orbit (14, 14a, 14b, 14c), and a fifth manoeuvre is performed during which an impulse is supplied to the second satellite (A, C, D) at apogee (19c) of the intermediate orbit (14c) so as to raise its perigee and transform the intermediate orbit (14c) into said second final orbit (11) constituted by an inclined low orbit.

2. A method according to claim 1, **characterised in that** the period TA of the waiting orbit (12bis) is determined so that the apogee (19) of said waiting orbit (12bis) is visible from a ground station, and **in that** the second manoeuvre which is situated in the vicinity of the apogee (19) of the waiting orbit (12bis) is controlled from the ground station.

3. A method according to claim 1 or claim 2, **characterised in that** the third manoeuvre for mid-course correction (5b) of the intermediate orbit (14) makes it possible to situate the perigee (6a) of the intermediate orbit (14) at an altitude in the range 80 km to 140 km.

4. A method according to any one of claims 1 to 3, **characterised in that** the fourth manoeuvre which includes at least one step implementing atmospheric braking, uses the attitude control of the second satellite (A, C, D) in such a manner that the braking axis of said satellite is substantially in alignment with its velocity vector.

5. A method according to any one of claims 1 to 4, **characterised in that** the fourth manoeuvre comprises a set of several steps implementing atmospheric braking so as to lower the apogee altitude (19, 19a, 19b) of the intermediate orbit (14, 14a, 14b) at each step.

6. A method according to any one of claims 1 to 5, for launching a plurality of second satellites (A, C, D) simultaneously onto final orbits constituted by low altitude orbits, and in particular low circular orbits of different inclinations, while a first satellite (B) is placed on a first final orbit (15) constituted by a geostationary transfer orbit of low inclination, or by a super-geostationary transfer orbit, the method being **characterised in that** during the second manoeuvre, a mid-course correction (5c) at the go half-orbit position of the waiting orbit (12bis) is performed separately on each second satellite (A, C, D) enabling each second satellite (A, C, D) to aim for a different change of inclination at apogee (19) of the waiting orbit (12bis), and during the third manoeuvre, a second mid-course correction (5b) is performed for each second satellite (A, C, D) on each intermediate orbit (14) to adjust the altitude of each perigee of each intermediate orbit (14).

7. A method according to any one of claims 1 to 5, for launching a plurality of second satellites (A, C, D) simultaneously on final orbits constituted by low altitude orbits while the first satellite (B) is placed on a first final orbit (15) constituted by a geostationary transfer orbit of low inclination, or by a super-geostationary transfer orbit, the method being **characterised in that** during the first manoeuvre, the second satellites (A, C, D) are transferred onto slightly different super-synchronous waiting orbits (12bis) by supplying very small speed increments, and during the second manoeuvre, identical inclination changes are performed on all of the second satellites (A, C, D) so as to place them on intermediate orbits (14) that are similar but having different periods, leading to different times when the various second satellites (A, C, D) pass through perigee of the intermediate orbits (14) such that at the end of the fifth manoeuvre, the various second satellites (A, C, D) are placed on the same final orbit (11) constituted by an inclined low orbit, while being at mutually different phases thereon.

8. A method according to claim 1, **characterised in that** the second satellite (A, C, D) is fitted with an on-board computer (211) and with a chemical thrust system comprising a main thruster (208) on-board said second satellite (A, C, D), and attitude control thrusters (210).

9. A method according to claim 1, **characterised in that** the second satellite (A, C, D) is fitted with an on-board computer (211) and also an electrical thrust system comprising at least high specific impulse electrical thrusters on-board said second satellite (A, C, D), the electrical thrusters (203) being capable of being of the ionic type, of the arc jet type, or of the closed electron drift type.

10. A method according to claim 8, **characterised in that** said second satellite (A, C, D) includes a star sensor (214), a variable field earth sensor (206), and an ephemeris table included in the on-board computer (211) making it possible to compute angles between the thrust vector and the earth-satellite direction and the sun-satellite direction, and thus to determine the attitude of the second satellite (A, C, D) while manoeuvring.

11. A method according to claim 10, **characterised in that** said second satellite (A, C, D) further includes gyros controlling the attitude control thrusters (210) causing the body of the second satellite to rotate so as to point the main thruster (208) in the aiming direction.

12. A method according to any one of claims 8 to 11, **characterised in that** the body of the second satellite (A, C, D) is provided with at least two laser retro-reflectors (207) making it possible by laser telemetry to determine very accurately the position of said second satellite (A, C, D) prior to the mid-course (5b) correction manoeuvres of the third manoeuvre.

13. A method according to claim 9, **characterised in that** the second satellite (A, C, D) includes a variable field earth horizon sensor (206) for obtaining the position of the earth, and reaction wheels for determining the attitude of the second satellite, and **in that** the on-board computer (211) implements a control relationship for the electrical thrusters (203) which consists in stabilizing the thrust vector perpendicularly to the earth-satellite direction.

14. A method according to claim 9, **characterised in that** the second satellite (A, C, D) includes a star sensor (214) together with an ephemeris table included in the on-board computer (211) to determine the attitude of said second satellite, and reaction wheels for maintaining the attitude of said second satellite, and **in that** the on-board computer (211) implements a control relationship for the electrical thrusters (203) which consists in pointing the thrust vector along an inertial direction.

15. A method according to any one of claims 8 to 14, **characterised in that** the second satellite (A, C, D) includes at least two solar panels (204) that are disposed symmetrically about the body of said second satellite (A, C, D).

16. A method according to any one of claims 8 to 14, **characterised in that** the second satellite (A, C, D) includes at least one solar panel (204) and a heat shield (216).
